# EUROPÄISCHE PATENTSCHRIFT

(11) **EP 3 837 431 B1**
(45) Veröffentlichungstag und Bekanntmachung des Hinweises auf die Patenterteilung: **22.01.2025**
(21) Anmeldenummer: 19778851.6
(22) Anmeldetag: 16.09.2019
(51) Int. Cl.: F01D 25/28, G01M 13/00, F02C 7/20, F16M 7/00, G01M 15/14

(54) **VERFAHREN ZUR MONTAGE EINES VERDICHTERS UND EINER GASTURBINE**
METHOD FOR THE ASSEMBLY OF A COMPRESSOR AND A GAS TURBINE
PROCEDE POUR L'ASSEMBLAGE D'UN COMPRESSOR ET UNE TURBINE A GAZ

(30) Priorität: 18.10.2018 DE 102018217823
(43) Veröffentlichungstag der Anmeldung: 23.06.2021
(73) Patentinhaber: Siemens Energy Global GmbH & Co. KG, 81739 München (DE)
(72) Erfinder: ABELE, Michael, 90574 Rosstal (DE); STOCKHAUSEN, Kai, 40489 Düsseldorf (DE); WALK, Oliver Tobias, 45147 Essen (DE)
(86) Internationale Anmeldenummer: PCT/EP2019/074687
(87) Internationale Veröffentlichungsnummer: WO 2020/078636

(56) Entgegenhaltungen:
- EP-A1- 0 246 470
- EP-A2- 2 278 128
- GB-A- 702 487
- US-A1- 2014 250 916
- US-A1- 2015 184 591

## Beschreibung

Die vorliegende Erfindung betrifft ein Verfahren zur Montage eines Verdichters und einer Gasturbine einer ersten Bauart an einer Position eines bestehenden Kraftwerks, an der zuvor ein Verdichter und eine Gasturbine einer zweiten Bauart auf einem speziell für diese zweite Bauart ausgelegten Fundament montiert waren, wobei sich die Bauarten zumindest in Bezug auf die Position und/oder die Anzahl von Ankerpunkten voneinander unterscheiden, an denen der Verdichter und die Gasturbine direkt und/oder über Stützstrukturen mit dem Fundament verbunden sind.

Die US 2014/250916 A1, die GB 702487 A, die EP 0246470 A1 sowie die EP 2278128 A2 offenbaren Verfahren und Konstruktionen zur Montage von Turbinen auf einem Fundament.

Die US 2014/250916 A1 offenbart nur eine erste Gasturbine mit einem Lager und einem ersten Fundament.

Verdichter und Gasturbinen sind in Kraftwerken auf speziell für diese ausgelegten Fundamenten aufgestellt. Mit anderen Worten ist jedes Fundament derart hergerichtet, dass es Ankerpunkte an denjenigen Positionen und in derjenigen Anzahl zur Verfügung stellt, an denen der Verdichter und die Gasturbine über die ihnen eigenen Stützstrukturen mit dem Fundament verbunden werden sollen, um Gewichtskräfte sowie während des Betriebs auftretende Betriebskräfte über die Stützstrukturen in das Fundament einleiten zu können. Die Position und die Anzahl der Ankerpunkte sind bauartspezifisch und werden herstellerseitig festgelegt. Sie variieren entsprechend von Hersteller zu Hersteller. Somit können Verdichter und Gasturbinen eines ersten Herstellers nicht auf Fundamenten befestigt werden, die zur Aufnahme von Verdichtern und Gasturbinen eines zweiten Herstellers ausgelegt sind. Müssen Verdichter und Gasturbinen eines Kraftwerks ausgetauscht werden, so entscheiden sich Kraftwerksbetreiber vor diesem Hintergrund normalerweise dafür, den neuen Verdichter und die neue Gasturbine wieder bei demjenigen Hersteller zu bestellen, der bereits die auszutauschenden Komponenten geliefert hat, selbst wenn ein Angebot eines konkurrierenden Herstellers besser ist. Nur wenn die neuen Komponenten vom alten Hersteller nicht mehr bezogen werden können, weil dieser beispielsweise nicht mehr existent ist, wird auf das Angebot anderer Hersteller zurückgegriffen. In diesem Fall wird das alte Fundament durch ein neues Fundament ersetzt, das dann entsprechend wieder speziell an den neu zu montierenden Verdichter und die neu zu montierende Gasturbine angepasst ist. Die Erneuerung eines Fundaments ist allerdings sehr zeitintensiv, so dass sie lange Ausfallzeiten des Kraftwerks zur Folge hat, was entsprechend hohe Kosten nach sich zieht. Darüber hinaus kann die Erneuerung eines Fundamentes zu einem Verlust der Betriebsgenehmigung führen, so dass ein neues Genehmigungsverfahren mit ungewissen Ausfallzeiten eingeleitet werden muss.

Ausgehend von diesem Stand der Technik ist es eine Aufgabe der vorliegenden Erfindung, ein alternatives Verfahren der eingangs genannten Art zu schaffen, das es dem Kraftwerksbetreiber ermöglicht, Verdichter und Gasturbinen einer ersten Bauart durch solche einer zweiten Bauart zu ersetzen, ohne dadurch nennenswerte Nachteile zu erleiden.

Zur Lösung dieser Aufgabe schafft die vorliegende Erfindung ein Verfahren der eingangs genannten Art, das dadurch gekennzeichnet ist, dass die Montage des neuen Verdichters und der neuen Gasturbine unter Verwendung einer Adapterkonstruktion auf dem bestehenden Fundament erfolgt. Die Adapterkonstruktion gleicht dabei insbesondere die unterschiedlichen Positionen und/oder Anzahl von Ankerpunkten beider Bauarten aus, so dass der neue Verdichter und die neue Gasturbine unter Verwendung ihrer Stützstrukturen montiert werden können. Ein wesentlicher Vorteil, der mit dem erfindungsgemäßen Verfahren einhergeht, besteht darin, dass Verdichter und Gasturbinen durch solche anderer Bauart ersetzt werden können, ohne dass es hierfür erforderlich ist, das bestehende Fundament zu verändern oder zu erneuern. Entsprechend sind trotz des Wechsels der Bauart keine zusätzlichen Ausfallzeiten des Kraftwerks oder Genehmigungsverfahren zu erwarten.

Gemäß der vorliegenden Erfindung weist das bestehende Fundament mehrere aufwärts vorstehende Fundamentblöcke auf, und die Adapterkonstruktion umfasst eine der Anzahl der Fundamentblöcke entsprechende Anzahl von metallischen Basisplatten, an deren

Oberseite Aufbauten positioniert sind, welche Ankerpunkte für den neuen Verdichter und/oder für die neue Gasturbine und/oder für Stützstrukturen des neuen Verdichters und/oder der neuen Gasturbine definieren, wobei die Basisplatten jeweils auf einem der Fundamentblöcke positioniert und an diesem befestigt werden.

Bevorzugt werden die Basisplatten mit bestehenden Ankerbolzen an den Fundamentblöcken befestigt, die in den Fundamentblöcken verankert sind und deren freien Enden aufwärts von den Fundamentblöcken vorstehen. Entsprechend muss für die Montage der Basisplatten keine Anpassung der bestehenden Ankerbolzen erfolgen.

Vorteilhaft sind an den Basisplatten sich abwärts erstreckende Seitenwände vorgesehen, die bei der Montage seitlich an dem zugeordneten Fundamentblock anliegend positioniert werden. Entsprechend können quer zur Vertikalen wirkende Kräfte nicht nur über die Ankerbolzen sondern auch über diese Seitenwände in das Fundament eingeleitet werden.

Die Basisplatten und/oder die sich abwärts von diesen erstreckenden Seitenwände weisen bevorzugt eine Plattenstärke von mindestens 40mm auf. So liegt die Plattenstärke einer unterhalb des Verdichters angeordneten Basisplatte bevorzugt im Bereich von 90 bis 110mm, und die Plattenstärke einer unterhalb der Gasturbine angeordneten Basisplatte liegt bevorzugt im Bereich von 40 bis 60mm.

Gemäß der vorliegenden Erfindung sind an der Oberseite einer ersten Basisplatte zumindest zwei Aufbauten in Form von Verdichteraufnahmeblöcken vorgesehen, auf die der zu montierende Verdichter oder jeweils eine Stützstruktur desselben aufgesetzt und an denen dieser/dieses befestigt wird. Über solche Verdichteraufnahmeblöcke werden Positionsund Höhenunterschiede zwischen Ankerpunkten des alten Verdichters und Ankerpunkten des neuen Verdichters ausgeglichen. An der Oberseite einer zweiten Basisplatte sind bevorzugt Aufbauten in Form von Gasturbinenaufnahmeblöcken vorgesehen, an denen an der Gasturbine montierte Stützstrukturen befestigt werden. Über solche Gasturbinenaufnahmeblöcke werden Positions- und Höhenunterschiede zwischen Ankerpunkten der alten Gasturbine und Ankerpunkten der neuen Gasturbine ausgeglichen.

Gemäß der vorliegenden Erfindung ist an der Oberseite der zweiten Basisplatte ein Aufbau in Form einer Halterung vorgesehen, an der eine an der zu montierenden Gasturbine vorgesehene Stützstruktur in Form einer Mittenführung befestigt wird. Über diese Halterung werden dann quer zur Vertikalen wirkende Kräfte in das Fundament eingeleitet.

Ferner schafft die vorliegende Erfindung eine Adapterkonstruktion, die dadurch gekennzeichnet ist, dass diese zur Befestigung an Fundamentblöcken eines Fundaments eines Kraftwerks ausgelegt ist und Ankerpunkte für einen Verdichter und/oder eine Gasturbine und/oder für Stützstrukturen eines Verdichters und/oder für Stützstrukturen einer Gasturbine definiert, wobei der Verdichter und/oder die Gasturbine eine vorbestimmte Bauart aufweist/aufweisen.

Bevorzugt umfasst die Adapterkonstruktion mehrere metallische Basisplatten, die jeweils zur Anordnung und Befestigung an einem der Fundamentblöcke ausgelegt sind, wobei an den Oberseiten der Basisplatten Aufbauten vorgesehen sind, welche die Ankerpunkte definieren.

Vorteilhaft sind an der Oberseite einer ersten Basisplatte zumindest zwei Aufbauten in Form von Verdichteraufnahmeblöcken vorgesehen, die derart ausgebildet sind, dass auf diese der Verdichter und/oder zumindest eine Verdichter-Stützstruktur desselben aufgesetzt und befestigt werden kann/können.

An der Oberseite einer zweiten Basisplatte sind bevorzugt Aufbauten in Form von Gasturbinenaufnahmeblöcken vorgesehen, die derart ausgebildet sind, dass auf diese die Gasturbine und/oder zumindest eine Gasturbinen-Stützstruktur derselben aufgesetzt und befestigt werden kann/können.

Vorteilhaft ist an der Oberseite der zweiten Basisplatte ein Aufbau in Form einer Halterung vorgesehen, die dazu ausgelegt ist, an dieser eine an der zu montierenden Gasturbine vorgesehene Stützstruktur in Form einer Mittenführung zu befestigen.

Gemäß einer Ausgestaltung sind an den Basisplatten sich abwärts erstreckende Seitenwände vorgesehen, die dazu ausgelegt sind, bei der Montage der jeweiligen Basisplatte an einem der Fundamentblöcke anliegend an diesem positioniert zu werden.

Vorteilhaft weisen die Basisplatten und/oder die sich abwärts von diesen erstreckenden Seitenwände eine Plattenstärke von mindestens 40mm auf.

Ferner schlägt die vorliegende Erfindung vor, eine erfindungsgemäße Adapterkonstruktion bei der Durchführung eines erfindungsgemäßen Verfahrens zu verwenden.

Weitere Merkmale und Vorteile der vorliegenden Erfindung werden anhand der nachfolgenden Beschreibung eines Verfahrens gemäß einer Ausführungsform der vorliegenden Erfindung unter Bezugnahme auf die beiliegende Zeichnung deutlich. Darin ist
- Figur 1: eine schematische perspektivische Ansicht eines Verdichters und einer Gasturbine, die unter Verwendung einer Adapterkonstruktion auf einem Fundament eines Kraftwerks montiert sind;

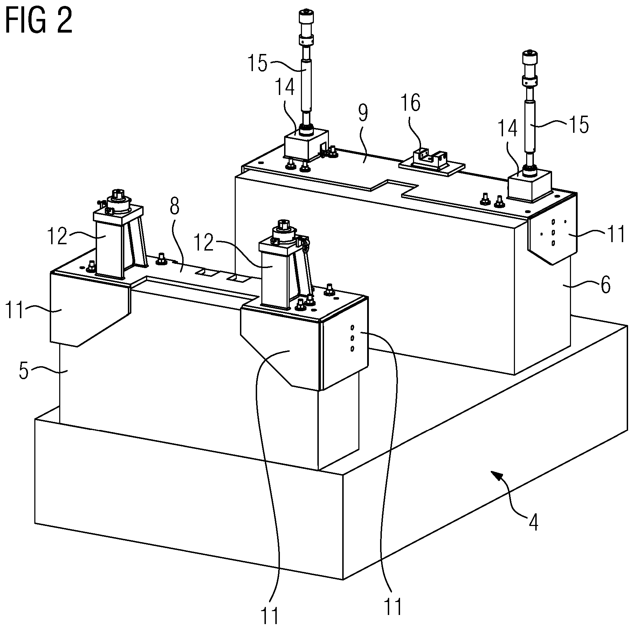

- Figur 2: eine schematische perspektivische Ansicht des in Figur 1 dargestellten Fundaments mit an diesem angeordneter Adapterkonstruktion;
- Figur 3: eine vergrößerte perspektivische Ansicht eines ersten Teilbereiches der Adapterkonstruktion und von Ankerbolzen des Fundaments; und
- Figur 4: eine vergrößerte perspektivische Ansicht eines zweiten Teilbereiches der Adapterkonstruktion und von Ankerbolzen des Fundaments.

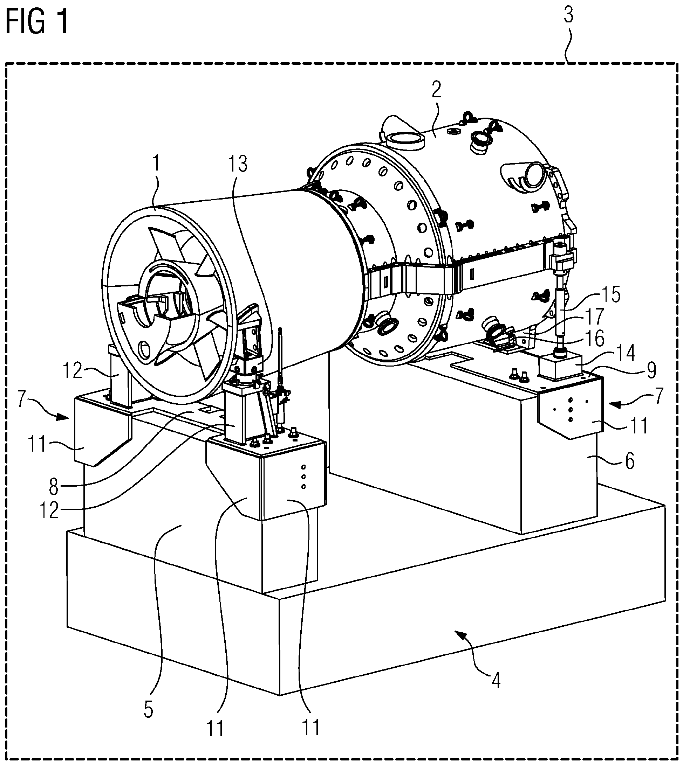

Figur 1 zeigt einen Verdichter 1 und eine Gasturbine 2 einer ersten Bauart, die innerhalb eines Kraftwerks 3 auf einem Fundament 4 angeordnet sind. Bei dem Fundament 4 handelt es sich um ein solches, das speziell für einen Verdichter und eine Gasturbine einer zweiten Bauart ausgelegt ist, die vorliegend nicht näher dargestellt sind. Der Verdichter 1 und die Gasturbine 2 der ersten Bauart unterscheiden sich zumindest dahingehend von dem Verdichter und der Gasturbine der zweiten Bauart, dass die Position und die Anzahl von Ankerpunkten verschieden ist, an denen Verdichter und Gasturbine direkt und/oder über ihnen zugeordnete Stützelemente mit dem Fundament 4 verbunden werden. Weitere Unterschiede können aber auch insbesondere in Bezug auf die äußeren Abmessungen der Komponenten bestehen. Um den Verdichter 1 und die Gasturbine 2 dennoch an dem Fundament 4 montieren zu können, ist auf das Fundament 4, das vorliegend zwei quaderförmige Fundamentblöcke 5 und 6 aufweist, eine Adapterkonstruktion 7 aufgesetzt, welche die unterschiedlichen Positionen und/oder die unterschiedliche Anzahl von Ankerpunkten beider Bauarten ausgleicht.

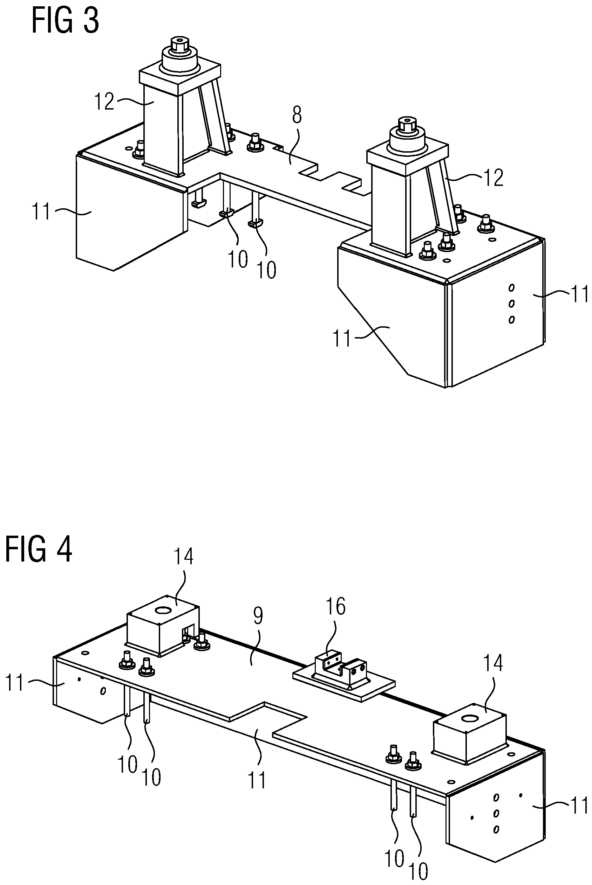

Im vorliegenden Fall umfasst die Adapterkonstruktion 7 zwei metallische Basisplatten 8 und 9, die jeweils dazu ausgelegt sind, auf einem der Fundamentblöcke 5, 6 positioniert und daran befestigt zu werden. Die Befestigung der Basisplatten 8 und 9 erfolgt über die bestehenden Ankerbolzen 10 des Fundaments 4, die in den Fundamentblöcken 5 und 6 verankert sind und deren freie Enden aufwärts von diesen vorstehen, wie es in den Figuren 3 und 4 angedeutet ist. Vertikal abwärts von den Basisplatten 8 und 9 erstrecken sich jeweils Seitenwände 11, die derart ausgebildet sind, dass sie im montierten Zustand seitlich an dem zugeordneten Fundamentblock 5, 6 anliegend positioniert sind. Im Falle der ersten Basisplatte 8 liegen diese Seitenwände 11 vorliegend an allen vier Seiten des Fundamentblocks 5 an, im Falle der Basisplatte 9 an drei Seiten des Fundamentblocks 6. Die Plattenstärke der ersten Basisplatte 8 und ihrer Seitenwände 11 beträgt vorliegend 100mm, und die Plattenstärke der zweiten Basisplatte 10 und ihrer Seitenwände 11 50mm. An den Oberseiten der Basisplatten 8 und 9 sind jeweils Aufbauten positioniert, welche Ankerpunkte für Stützstrukturen des Verdichters 1 bzw. der Gasturbine 2 definieren. Die Basisplatte 8 umfasst vorliegend zwei Aufbauten in Form von Verdichteraufnahmeblöcken 12, auf die Verdichter-Stützstrukturen 13 aufgesetzt sind, so dass der Verdichter 1 auf den Verdichteraufnahmeblöcken 12 ruht. Die zweite Basisplatte 9 umfasst zum einen Aufbauten in Form von zwei Gasturbinenaufnahmeblöcken 14, an denen an der Gasturbine 2 montierte, vorliegend stabartig ausgebildete Gasturbinen-Stützstrukturen 15 befestigt sind. Zum anderen umfasst die zweite Basisplatte 9 einen Aufbau in Form einer vorliegend mittig angeordneten Halterung 16, an der eine an der Gasturbine 2 vorgesehene Stützstruktur in Form einer Mittenführung 17 befestigt ist. Über die Verdichter-Stützstrukturen 13 und die Gasturbinen-Stützstrukturen 15 werden im Wesentlichen vertikal wirkende Kräfte über die Adapterkonstruktion 7 in das Fundament 4 eingeleitet, insbesondere die Gewichtskräfte des Verdichters 1 und der Gasturbine 2. Die Mittenführung 17 dient in erster Linie dazu, quer zur Vertikalen wirkende Kräfte über die Adapterkonstruktion 7 in das Fundament 4 einzuleiten, die während des Betriebs des Verdichters 1 und der Gasturbine 2 auftreten können.

Zur Montage des Verdichters 1 und der Gasturbine 2 erster Bauart an derjenigen Position des Kraftwerks 3, an der zuvor ein Verdichter und eine Gasturbine zweiter Bauart auf dem speziell für diese zweite Bauart ausgelegten Fundament 4 montiert waren, wird in einem ersten Schritt die Adapterkonstruktion 7 an dem Fundament 4 befestigt. Mit anderen Worten werden die Basisplatten 8 und 9 über die bestehenden Ankerbolzen 10 an den Fundamentblöcken 5 und 6 montiert. In einem zweiten Schritt werden dann der Verdichter 1 und die Gasturbine 2 mit ihren Stützstrukturen auf der Adapterkonstruktion 7 positioniert, woraufhin die Verdichter-Stützstrukturen 13, die Gasturbinen-Stützstrukturen 15 und die Mittenführung 17 an den zugeordneten Aufbauten befestigt werden. Die Befestigung kann wahlweise lösbar oder dauerhaft unter Einsatz eines Schweißverfahrens oder dergleichen erfolgen.

Der wesentliche Vorteil, der mit dem Einsatz der Adapterkonstruktion 7 einhergeht, besteht darin, dass der Verdichter 1 und die Gasturbine 2 auf den bestehenden Fundamentblöcken 5 und 6 montiert werden können, obwohl diese Fundamentblöcke 5 und 6 nicht für die Aufnahme des Verdichters 1 und der Gasturbine 2 ausgelegt sind. Entsprechend ist es nicht erforderlich, das bestehende Fundament 4 zu verändern oder zu erneuern. Damit sind trotz des Wechsels der Bauart keine zusätzlichen Ausfallzeiten des Kraftwerks oder Genehmigungsverfahren zu erwarten.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren
zur Montage eines Verdichters (1) und einer Gasturbine (2) einer ersten Bauart an einer Position eines bestehenden Kraftwerks (3),
an der zuvor ein Verdichter und eine Gasturbine einer zweiten Bauart auf einem speziell für diese zweite Bauart ausgelegten Fundament (4) montiert waren,
wobei sich die Bauarten zumindest in Bezug auf die Position und/oder die Anzahl von Ankerpunkten voneinander unterscheiden,
an denen der Verdichter und die Gasturbine direkt und/oder über Stützstrukturen mit dem Fundament verbunden sind, wobei die Montage des neuen Verdichters (1) und der neuen Gasturbine (2) unter Verwendung einer Adapterkonstruktion (7) auf dem bestehenden Fundament (4) erfolgt,
wobei das bestehende Fundament (4) mehrere aufwärts vorstehende Fundamentblöcke (5, 6) aufweist, und
dass die Adapterkonstruktion (7) eine der Anzahl der Fundamentblöcke (5, 6) entsprechende Anzahl von metallischen Basisplatten (8, 9) umfasst,
an deren Oberseite Aufbauten positioniert sind,
welche Ankerpunkte für den neuen Verdichter (1) und/oder für die neue Gasturbine (2) und/oder
für Stützstrukturen des neuen Verdichters (1) und/oder der neuen Gasturbine (2) definieren,
wobei die Basisplatten (8, 9) jeweils auf einem der Fundamentblöcke (5, 6) positioniert und an diesem befestigt werden.

2. Verfahren nach Anspruch 1,
**dadurch gekennzeichnet,**
**dass** die Basisplatten (8, 9) mit bestehenden Ankerbolzen (10) an den Fundamentblöcken (5, 6) befestigt werden, die in den Fundamentblöcken (5, 6) verankert sind und deren freien Enden aufwärts von den Fundamentblöcken (5, 6) vorstehen.

3. Verfahren nach Anspruch 1 oder 2,
**dadurch gekennzeichnet,**
**dass** an den Basisplatten (8, 9) sich abwärts erstreckende Seitenwände (11) vorgesehen sind, die bei der Montage seitlich an dem zugeordneten Fundamentblock (5, 6) anliegend positioniert werden.

4. Verfahren nach einem der Ansprüche 1 bis 3,
**dadurch gekennzeichnet,**
**dass** die Basisplatten (8, 9) und oder die sich abwärts von diesen erstreckenden Seitenwände (11) eine Plattenstärke von mindestens 40mm aufweisen.

5. Verfahren nach einem der Ansprüche 1 bis 4,
**dadurch gekennzeichnet,**
**dass** an der Oberseite einer ersten Basisplatte (8) zumindest zwei Aufbauten in Form von Verdichteraufnahmeblöcken (12) vorgesehen sind, auf die der zu montierende Verdichter (1) oder jeweils eine Stützstruktur (13) desselben aufgesetzt und an denen dieser/dieses befestigt wird.

6. Verfahren nach einem der Ansprüche 1 bis 5,
**dadurch gekennzeichnet,**
**dass** an der Oberseite einer zweiten Basisplatte (9) Aufbauten in Form von Gasturbinenaufnahmeblöcken (14) vorgesehen sind, an denen an der Gasturbine (2) montierte Stützstrukturen (15) befestigt werden.

7. Verfahren nach Anspruch 6,
**dadurch gekennzeichnet,**
**dass** an der Oberseite der zweiten Basisplatte (9) ein Aufbau in Form einer Halterung (16) vorgesehen ist, an der eine an der zu montierenden Gasturbine (2) vorgesehene Stützstruktur in Form einer Mittenführung (17) befestigt wird.

## Claims

1. Method
for mounting a compressor (1) and a gas turbine (2) of a first design at a position of an existing power plant (3),
at which position a compressor and a gas turbine of a second design were previously mounted on a foundation (4) specifically designed for this second design,
wherein the designs differ from each other at least in terms of the position and/or the number of anchoring points,
at which the compressor and the gas turbine are connected directly and/or via supporting structures to the foundation, wherein the new compressor (1) and the new gas turbine (2) are mounted on the existing foundation (4) using an adapter construction (7),
wherein the existing foundation (4) has a plurality of upwardly projecting foundation blocks (5, 6), and
in that the adapter construction (7) comprises a number of metallic base plates (8, 9) corresponding to the number of foundation blocks (5, 6),
on the top side of which structures are positioned,
which structures define anchoring points for the new compressor (1) and/or for the new gas turbine (2) and/or
for supporting structures for the new compressor (1) and/or the new gas turbine (2),
wherein the base plates (8, 9) are each positioned on one of the foundation blocks (5, 6) and are fastened to it.

2. Method according to Claim 1,
**characterized**
**in that** the base plates (8, 9) are fastened to the foundation blocks (5, 6) by way of existing anchor bolts (10) which are anchored in the foundation blocks (5, 6) and the free ends of which project upwards from the foundation blocks (5, 6).

3. Method according to Claim 1 or 2,
**characterized**
**in that** downward extending side walls (11) are provided on the base plates (8, 9), which side walls are positioned so as to bear laterally against the assigned foundation block (5, 6) during assembly.

4. Method according to one of Claims 1 to 3,
**characterized**
**in that** the base plates (8, 9) and/or the side walls (11) extending downwards from them have a plate thickness of at least 40 mm.

5. Method according to one of Claims 1 to 4,
**characterized**
**in that** at least two structures in the form of compressor mounting blocks (12) are provided on the top side of a first base plate (8), onto which structures the compressor (1) to be mounted or in each case one supporting structure (13) thereof is placed and to which it is fastened.

6. Method according to one of Claims 1 to 5,
**characterized**
**in that** structures in the form of gas turbine mounting blocks (14) are provided on the top side of a second base plate (9), to which structures supporting structures (15) mounted on the gas turbine (2) are fastened.

7. Method according to Claim 6,
**characterized**
**in that** a structure in the form of a bracket (16) is provided on the top side of the second base plate (9), to which structure a supporting structure in the form of a central guide (17) provided on the gas turbine (2) to be mounted is fastened.

## Revendications

1. Procédé de montage d'un compresseur (1) et d'une turbine (2) à gaz d'un premier type de construction en une position d'une centrale (3) électrique existante,
sur laquelle étaient auparavant montés un compresseur et une turbine à gaz d'un deuxième type de construction sur une fondation (4) conçue spécialement pour ce deuxième type de construction,
dans lequel les types de construction se distinguent l'un de l'autre au moins en ce qui concerne la position et/ou le nombre de points d'ancrage,
où le compresseur et la turbine à gaz sont reliés directement et/ou par des structures d'appui à la fondation,
dans lequel le montage du compresseur (1) nouveau et de la turbine (2) à gaz nouvelle s'effectue en utilisant une construction (7) d'adaptateur sur la fondation (4) existante, dans lequel la fondation (4) existante a plusieurs blocs (5, 6) de fondation en saillie vers le haut, et
en ce que la construction (7) d'adaptateur comprend un nombre de plaques (8, 9) métalliques de base correspondant au nombre des blocs (5, 6) de la fondation,
à la face supérieure desquelles sont mises en position des superstructures,
qui définissent des points d'ancrage pour le compresseur (1) nouveau et/ou la turbine (2) à gaz nouvelle et/ou des structures d'appui du compresseur (1) nouveau et/ou de la turbine (2) à gaz nouvelle,
dans lequel les plaques (8, 9) de base sont mises en position respectivement sur l'un des blocs (5, 6) de la fondation et y sont fixées.

2. Procédé suivant la revendication 1,
**caractérisé en ce que**
les plaques (8, 9) de base sont fixées aux blocs (5, 6) de la fondation par des boulons (10) d'ancrage existants, qui sont ancrés dans les blocs (5, 6) de la fondation et dont les extrémités libres sont en saillie des blocs (5, 6) de la fondation vers le haut.

3. Procédé suivant la revendication 1 ou 2,
**caractérisé en ce que**
sur les plaques (8, 9) de base sont prévues des parois (11) latérales s'étendant vers le bas, qui lors du montage sont mises en position latéralement au bloc (5, 6) de fondation associé, en s'y appliquant.

4. Procédé suivant l'une des revendications 1 à 3,
**caractérisé en ce que**
les plaques (8, 9) de base et/ou les parois (11) latérales s'en étendant vers le bas ont une épaisseur de plaque d'au moins 40 mm.

5. Procédé suivant l'une des revendications 1 à 4,
**caractérisé en ce que**
sur la face supérieure d'une première plaque (8) de base sont prévues au moins deux superstructures sous la forme de blocs (12) de réception du compresseur, sur lesquelles on pose le compresseur (1) à monter ou respectivement une structure (13) d'appui de celui-ci et auxquelles on fixe celui-ci/celle-ci.

6. Procédé suivant l'une des revendications 1 à 5, **caractérisé en ce que**
sur la face supérieure d'une deuxième plaque (9) de base sont prévues des superstructures sous la forme de blocs (14) de réception d'une turbine à gaz, auxquels on fixe des structures (15) d'appui montées sur la turbine (2) à gaz.

7. Procédé suivant la revendication 6,
**caractérisé en ce que**
sur la face supérieure de la deuxième plaque (9) de base est prévue une superstructure sous la forme d'une fixation (16), à laquelle on fixe une structure d'appui, prévue sur la turbine (2) à gaz à monter, sous la forme d'un guidage (17) au milieu.
